# EUROPÄISCHE PATENTANMELDUNG

(11) **EP 2 394 724 A2**
(43) Veröffentlichungstag der Anmeldung: **14.12.2011**
(21) Anmeldenummer: 11003940.1
(22) Anmeldetag: 12.05.2011
(51) Int. Cl.: B01D 21/00, B01D 21/24, E03F 5/14, E03F 5/20, C02F 1/40

(54) **Abscheideranlage und Vorrichtung zur Behandlung von Abwasser**

(30) Priorität: 14.05.2010 DE 102010020492
(71) Anmelder: Opanski, Josef Zoltan, 88339 Bad Waldsee (DE)
(72) Erfinder: Die Erfindernennung liegt noch nicht vor
(74) Vertreter: Dobler, Markus

(57) **Zusammenfassung**

Die Erfindung betrifft eine Vorrichtung zur Behandlung von Abwasser mit einem vom Abwasser durchströmbaren Behälter (2), in welchen im Betrieb des Behälters (2) das Abwasser über einen Zulauf (5) zufließt und aus dem das behandelte Abwasser über einen Ablauf (7) abfließt, wobei Strömungsleitmittel mit einer Trennwand (9, 10) vorhanden sind, welche eine Strömung des Abwassers in dem Behälter (2) derart vorgeben, dass wesentliche Anteile von im Abwasser mitgeführten Sink-und/oder Schwimmstoffen im Behälter (2) abscheidbar sind. Erfindungsgemäß durchströmt das Abwasser im weiteren Strömungsverlauf nach der Trennwand (9, 10) eine Siphoneinrichtung (14, 15) und gelangt anschließend in einen zu anderen Bereichen des Behälters (2) getrennten Nachbehandlungsbereich (17, 18).

## Beschreibung

Im Bereich der Stofftrennung bzw. Abscheidetechnik insbesondere bei der Abwasserbehandlung sind beispielsweise kombinierte Schlamm- und Leichflüssigkeitsabscheideranlagen bekannt. Für zumindest eine Vorbehandlung von Abwasser können mit solchen Behandlungsanlagen im Abwasser beispielsweise mitgeführte Sink- und/oder Schwimmstoffe großteils zurückgehalten und anschließend gesondert entfernt werden. Die Abscheidung erfolgt im Wesentlichen physikalisch bzw. durch Schwerkraft, wobei die Anlagen in der Regel im Durchlaufverfahren betrieben werden.

Bei Behandlungsanlagen sind unterschiedliche Behälter und/oder mehrere nacheinander vom Abwasser durchflossene Behälter im Einsatz, wobei in der Regel in einem Behälter eine Strömungsgeschwindigkeit des zufließenden Abwassers verlangsamt wird, was mit einer theoretischen Aufenthaltszeit des Abwassers in dem Behälter korreliert. Um größere Aufenthaltszeiten für das Abwasser zu erreichen, wird bislang das Abwasseraufnahmevolumen des Behälters entsprechend vergrößert, so dass auch der Wirkungsgrad der Abscheideleistung der Anlage verbessert wird. Vor dem Hintergrund immer höherer Anforderungen an einzuhaltende gesetzliche Grenzwerte für Ablaufparameter des behandelnden Abwassers, wie zum Beispiel Kohlenwasserstoffe, kommen die in der Praxis wirtschaftlich einsetzbare Anlagen an ihre Grenzen.

### Aufgabe und Vorteile der Erfindung:

Aufgabe der vorliegenden Erfindung ist es, eine praxistaugliche Anordnung zur Vorbehandlung von Abwasser bereitzustellen, mit welcher vorgegebene Ablaufwerte für Abwasserparameter sicher eingehalten werden können. Insbesondere soll die Anordnung kompakt bauend und mit wenig Wartungsaufwand und für Reinigungs- und Inspektionsarbeiten gut zugänglich betreibbar sein.

Diese Aufgabe wird durch die unabhängigen Ansprüche gelöst. In den abhängigen Ansprüchen sind vorteilhafte Varianten der Erfindung aufgezeigt.

Die Erfindung geht zunächst aus von einer Vorrichtung zur Behandlung von Abwasser mit einem vom Abwasser durchströmbaren Behälter, in welchem im Betrieb des Behälters das Abwasser über einen Zulauf zufließt und aus dem das behandelte Abwasser über einen Ablauf abfließt, wobei Strömungsleitmittel mit einer Trennwand vorhanden sind, welche eine Strömung des Abwassers in den Behälter derart vorgeben, dass wesentliche Anteile von im Abwasser mitgeführten Sink- und/oder Schwimmstoffen im Behälter abscheidbar sind. Der Behälter kann eine beliebige Form aufweisen, insbesondere mit einer runden oder viereckigen Grundfläche. Als Zulauf kann ein einfaches vom Abwasser durchströmbares Zulaufrohr, mit einem im Behälter nach unten weisenden Rohrabschnitt bzw. eine Öffnung in einer Behälterwand dienen. Ebenso kann der Ablauf insbesondere ein abgewinkeltes Rohr bzw. einen im Behälter nach unten weisenden Rohrabschnitt umfassen bzw. ein einfaches Loch in der Behälterwand sein.

Ein erster wesentlicher Aspekt der Erfindung liegt darin, dass die Trennwand derart ausgebildet ist, dass im Betrieb des Behälters das vom Zulauf kommende Abwasser entlang der Trennwand in Richtung eines dem Zulauf gegenüberliegenden Bereichs des Behälters führbar ist, wobei das Abwasser im weiteren Strömungsverlauf eine Siphoneinrichtung durchströmt und anschließend in einen zu anderen Bereichen des Behälters getrennten Nachbehandlungsbereich gelangt. Nach Passieren des Nachbehandlungsbereichs verlässt das vorbehandelte Abwasser im weiteren Strömungsverlauf über den Ablauf den Behälter. Mit der erfindungsgemäßen Anordnung wird eine kompakt bauende Behandlungsvorrichtung für Abwasser mit einem vergleichsweise hohen Wirkungsgrad einer Abscheideleistung erzielt. Das Abwasser wird hierbei zunächst über einen mittleren Bereich hinaus gegebenenfalls bis zu einer dem Zulauf entgegengesetzt gelegenen Seite des Behälters geführt. Insbesondere ist vorteilhafterweise ein vergleichsweise langer erster Abschnitt eines Fließweges des Abwassers im Behälter ohne Umlenkung bzw. turbulente Strömung realisiert. Dies ist für die Abscheidung der Sink- und Schwimmstoffe vorteilhaft, insbesondere von wesentlichen Anteilen dieser Stoffe z. B. für eine Vor- bzw. Grobabscheidung.

Mit dem vergleichsweise längeren Strömungsweg des Abwassers durch den Behälter zwischen Zu- und Ablauf, was zum Beispiel gegenüber bekannten Anlagen mit vergleichbaren Behältern ein dreifach längerer Strömungsweg sein kann, ist eine erhöhte Abscheideleistung gegenüber den bekannten Anlagen möglich.

Bevorzugt ist die Trennwand als Tauchwand ausgebildet. So lässt sich im ersten Strömungsbereich des Abwassers im Behälter, also nach Passieren des Zulaufs bzw. beim Entlangströmen an zumindest einer Seite der Trennwand, neben einem Aufschwimmen von Schwimmstoffen, eine effektive Abscheidung von Sinkstoffen erreichen. In diesem Bereich des Behälters findet eine Vorabscheidung bzw. eine Abscheidung gemäß eines Abscheiders der Klasse II statt. Im anschließenden durch eine Siphoneinrichtung vom vorangehenden Bereich getrennten Nachbehandlungsbereich kann dann besonders effektiv eine Abscheidung von kleinsten schwimmenden Partikeln bzw. Leichtflüssigkeitströpfchen stattfinden, die sich im Abwasser ansonsten ungerichtet bzw. sehr langsam bewegen. Im von Strömungs- und Absinkvorgängen in den anderen Bereichen unbeeinflussten Nachbehandlungsbereich können sich die Schweb- bzw. Schwimmpartikel besonders gut aneinanderlagern bzw. zusammenfließen und größere Tropfen bilden, so dass die entstandenen Partikel bzw. Tropfen nach dem Schwerkraftprinzip nach oben steigen bzw. schneller flotieren, wo sie sich sammeln und später abgesaugt werden können.

Vorteilhafterweise kann damit ein gesonderter Abscheider der Klasse I mit z. B. eingebautem Koaleszenzeinsatz, der bisher häufig für eine Nachabscheidung von Leichtflüssigkeit und anderen Schwimmstoffen anschließend zu einem Abscheider der Klasse II nötig ist, in der Behandlungsvorrichtung entfallen. Dies ist vorteilhaft, da in der Praxis Koaleszenzeinsätze oft verstopfen.

Eine erfindungsgemäße Abscheideranlage kann demgegenüber kleiner gebaut sein, was aus wirtschaftlichen Erwägungen bzw. aus Transportgründen vorteilhaft ist.

Der Nachbehandlungsbereich ist abgesehen vom Ein- und Auslaufbereich mit Siphon insbesondere strömungsberuhigt bzw. allseitig zu anderen Bereichen des Behälters getrennt. Somit kann die Form, Größe bzw. das vom Abwasser einnehmbare Volumen und/oder ein Strömungsweg des Nachbehandlungsbereichs individuell vorgegeben werden. Vorteilhafterweise ist der getrennte Nachbehandlungsbereich im vom Abwasser einnehmbare Volumen deutlich kleiner als die anderen Bereiche des Behälters zur Aufnahme von Abwasser im Betrieb des Behälters, was für eine effektive Nachbehandlung bzw. zusammenführung kleiner Schwimm- bzw. Leichtflüssigkeitspartikel ausreichend ist. Der Nachbehandlungsbereich kann insbesondere als dreiseitige bzw. unten und beidseitig geschlossene und oben offene Rinne bzw. als Kanal ohne Einbauten bzw. Strömungshindernisse bzw. glattwandig ausgebildet sein. Ein Zufließen in den Nachbehandlungsbereich von Abwasser erfolgt ausschließlich über die Siphoneinrichtung.

Ein weiterer wesentlicher Aspekt der Erfindung ist darin zu sehen, dass der Zulauf und der Ablauf in Draufsicht auf den Behälter über einen Winkelbereich von mehr als 200°, insbesondere von mehr als 300° versetzt sind. Der Winkelversatz ist auf einen Winkelbereich bezogen, der zwischen einem Bezugspunkt und dem Zulauf und dem Bezugspunkt und dem Ablauf aufgespannt ist, wobei der überstrichene Winkel des Winkelbereichs gemäß einer Richtung des Strömungsweges des Abwassers festgelegt ist. Als Bezugspunkt wird von einem Mittelpunkt bzw. einem Bezugspunkt in einem mittleren Bereich einer Grundfläche des Behälters ausgegangen.

Beispielsweise bei einem Behälter in Form eines stehenden Zylinders bzw. bei einer runden Grundfläche des Behälters, kann ein Ablauf in einem vom Zulauf entfernten Bereich des Behälters eingerichtet sein. Der Ablauf kann aber auch nahe des Zulaufs vorhanden sein, insbesondere durch die Trennwand getrennt, so dass keine Kurzschlussströme von Abwasser direkt vom Zulauf in den Ablauf auftreten können. Der Behälter kann damit für unterschiedliche Zu- und Ablaufsituationen eingesetzt werden.

Weiter wird vorgeschlagen, dass eine Umlenkanordnung vorgesehen ist, so dass an einem dem Zulauf abgewandten Ende der Trennwand eine Umlenkung des Abwassers erfolgt. Somit kann das entlang einer Seite der Trennwand insbesondere gerade geführte Abwasser umgelenkt werden, insbesondere in eine entgegen gesetzte Richtung bzw. in Richtung zum Zulauf hin. Entlang der Trennwand kann damit beidseitig eine grobe Abscheidung der Sink- bzw. Schlammstoffe und der Schwimmstoffe erfolgen. Die Umlenkanordnung kann beispielsweise eine gegenüber dem Zulauf liegende Behälterwand oder eine andere innerhalb des Behälters vorhandene Fläche sein, gegen welche das ankommende Abwasser strömt. Die Umlenkung kann vorteilhaft mit oder ohne Aufteilung in Teilströme und ohne größere Turbulenzen zum Beispiel an einer konkav gebogenen Wand der Umlenkanordnung erfolgen.

Außerdem kann es vorteilhaft sein, dass die Umlenkanordnung ausgebildet ist, den Abwasserstrom in zwei zumindest nahezu gleich große Teilströme umzulenken bzw. aufzuteilen. Ein Umlenkwinkel der mit der Umlenkanordnung erreichbaren Umlenkung kann beispielsweise ca. 90° oder bis ca. 360° betragen.

Prinzipiell kann mit der Umlenkanordnung eine Umlenkung des Abwassers an geraden Wandungsabschnitten bzw. Abschnitten der Strömungsleitmittel erfolgen und/oder an gekrümmt ausgebildeten Wandungsabschnitten.

Dies ermöglicht eine problemlose Adaption der Umlenkanordnung innerhalb von Behältern mit gebogenen und/oder geraden Wandabschnitten.

Weiter wird vorgeschlagen, dass der Nachbehandlungsbereich derart im Behälter integriert ist, dass im Betrieb des Behälters der Nachbehandlungsbereich zumindest teilweise unterhalb eines Abwasserspiegels liegt, wobei auf einer Innenseite einer Wandung des Nachbehandlungsbereichs eine Strömung des Abwassers vorherrscht, welche zur vorherrschenden Strömung des Abwassers auf einer Außenseite der Wandung des Nachbehandlungsbereichs entgegengesetzt ist. So kann auf engstem Raum eine Trennung von einem Vorbehandlungsbereich und einem Nachbehandlungsbereich erzielt werden. Insbesondere kann durch die Trennung des Nachbehandlungsbereichs von anderen Bereichen ein gezielt vorgebbarer Strömungsweg des Abwassers innerhalb des Behälters erreicht werden.

Grundsätzlich ist unter dem Betrieb des Behälters ein Zustand zu verstehen, in welchem der Behälter gefüllt ist und Abwasser einströmen und aus diesem über den Ablauf wieder ausströmen kann.

Die höchsten Anforderungen an die Abscheideanlage bzw. Behandlungsvorrichtung treten in einem Zustand auf, in dem kontinuierlich Abwasser über den Zulauf in den Behälter zufließt und aus diesem über den Ablauf wieder abfließt. Denn dies ist mit den geringsten Aufenthaltszeiten des Abwassers im Behälter verbunden, die sich entsprechend dem Zulaufvolumen pro Zeit und dem Aufnahmevolumen für Abwasser des Behälters errechnet.

Es ist überdies vorteilhaft, dass der Nachbehandlungsbereich rinnenartig ausgebildet ist, insbesondere benachbart zu einer Innenseite einer Behälterwand verläuft. So kann die Anordnung insbesondere kompakt ausgebildet werden. Außerdem ist ein rinnenartig ausgebildeter Nachbehandlungsbereich strömungstechnisch vorteilhaft, insbesondere wenn er nach oben offen ist, leicht zugänglich bzw. ohne Probleme zu reinigen.

Gegebenenfalls kann eine ohnehin vorhandene Innenseite der Behälterwand als ein Teil einer Wandung des rinnenartigen Nachbehandlungsbereichs dienen. Dies ist insbesondere Platz und Material sparend.

Besonders vorteilhaft ist es, dass der Nachbehandlungsbereich so abgestimmt ist, dass ein Strömungsweg des Abwassers im Nachbehandlungsbereich einen wesentlichen Anteil eines theoretischen Strömungsweges des Abwassers im Behälter vom Zulauf zum Ablauf ausmacht, insbesondere ca. ein Drittel des gesamten theoretischen Strömungsweges. Dies kann beispielsweise bei runden bzw. zylindrischen Behältern eine Strecke vom 1,2- bis 1,3fachen des Durchmessers des Behälters sein.

In einer vorteilhaften Modifikation des Erfindungsgegenstandes ist der Nachbehandlungsbereich ausgestaltet, dass ein vom Abwasser im Betrieb des Behälters eingenommenes Volumen im Nachbehandlungsbereich einen vergleichsweise geringen Anteil eines Gesamtaufnahmevolumens für Abwasser im Betrieb des Behälters ausmacht. Das Aufnahmevolumen des Nachbehandlungsbereichs kann beispielsweise im Bereich von ca. 10 % des Gesamtaufnahmevolumens für Abwasser im Behälter sein.

Es ist überdies vorteilhaft, dass zwei gegenüberliegende im Betrieb des Behälters im Abwasser teilweise eingetauchte Trennwände vorhanden sind, in deren Zwischenbereich vom Zulauf kommendes Abwasser mündet und im Zwischenbereich eine Grobreinigung des Abwassers stattfinden kann. Insbesondere sind die beiden Trennwände als Tauchwände ausgebildet. Die beiden Trennwände können zum Beispiel parallel zueinander verlaufen und zumindest annähernd gleich weit in den Behälter eintauchen. Die Trennwände sind dabei mit ihrem unteren Ende von einem Behälterboden ausreichend beabstandet. Somit wird ein oben liegender Anteil des Abwassers kanalartig geführt, wobei die unten offenen Tauchwände eine Verbindung zum weiteren Behältervolumen freigeben, so dass sich die Fließgeschwindigkeit des einfließenden Abwassers durch das vergleichsweise große zur Verfügung stehende Volumen zwischen den Trennwänden und den offen anschließenden Bereichen im Behälter verringert. Dadurch können mitgeführte Sinkstoffe absinken und unbehindert von den Trennwänden auf einer Bodenfläche des Behälters gesamtflächig verteilen und eine Bodenschicht bilden.

Es ist überdies vorteilhaft, dass sich die Trennwand von einer Behälterwand in Richtung eines dem Zulauf entgegengesetzten Bereichs des Behälters erstreckt. So kann ein Abstand zwischen gegenüberliegenden Innenseiten des Behälters, unter Überbrückung eines mittleren Bereichs des Behälters, zur Bereitstellung einer ersten gerade verlaufenden Teil-Strecke einer gesamten Fließstrecke des Abwassers durch den Behälter genutzt werden. Denn es ist für eine Abscheidung der Schwimm-und Sinkstoffe vorteilhaft, dass in einem ersten Abscheideschritt im Behälter bzw. bei relativ hohen Stoffkonzentrationen der mitgeführter Stoffe, ein möglichst langer Strömungsweg ohne Umlenkungen bzw. Turbulenzen zur Verfügung steht, womit eine besonders effektive Vor- bzw. Grobabscheidung der mitgeführten Schwimm- und Sinkstoffe erreicht wird. Anders ausgedrückt kann bei vergleichbaren sonstigen Bedingungen auf einem gleich langen Strömungsweg, bei dem jedoch Umlenkungen bzw. Turbulenzen auftreten, nur eine schlechtere Abscheideleistung erzielt werden.

Ein zulaufseitiges Ende der Trennwand, welches z. B. an der Behälterwand angrenzt, kann seitlich neben dem Zulauf positioniert sein. Die Trennwand ist bevorzugt dünnwandig, um vergleichsweise wenig Volumen im vom Abwasser eingenommenen Teil des Behälters zu beanspruchen.

Eine alternative vorteilhafte Ausführungsform des Erfindungsgegenstandes zeichnet sich dadurch aus, dass genau eine im Betrieb des Behälters im Abwasser teilweise eingetauchte Trennwand vorgesehen ist, welche sich zumindest bis zu einem mittig gelegenen Bereich des Behälters erstreckt. Die Trennwand ist insbesondere als Tauchwand ausgebildet. Die Trennwand erstreckt sich insbesondere von einer Seite des Behälters, in dem der Zulauf positioniert ist, auf eine gegenüber liegende des Behälters, in dessen Bereich der Ablauf positioniert sein kann oder eine Umlenkung erfolgen kann. Die Trennwand erstreckt sich insbesondere nicht gänzlich bzw. nicht durchgehend bis zur gegenüber liegenden Seite des Behälters, sondern lässt am Ende der Trennwand einen entsprechenden Strömungsweg für das Abwasser frei. Am Ende der Trennwand findet in der Regel eine Umlenkung des Abwasserstromes statt, beispielsweise um 90° oder mehr bis zu nahezu 360°, was insbesondere über die Umlenkanordnung, erfolgt. Das Abwasser kann auf dem weiteren Strömungsweg entlang der anderen Seite der genau einen Trennwand geführt werden bzw. in eine entgegen gesetzte Richtung weiterfließen. Vorteilhafterweise dienen beide Hauptflächen der Trennwand jeweils als Strömungsleitfläche für das Abwasser.

Schließlich ist es auch vorteilhaft, dass sich der Zulauf und der Ablauf auf der gleichen Seite des Behälters befinden. Dies kann aus strömungstechnischen und anderen Gründen vorteilhaft sein. Insbesondere ist dann vorteilhafterweise eine Zugänglichkeit von Zu- und Ablauf an einer Stelle des Behälters von Außen ohne Weiteres möglich. Besonders vorteilhaft ist es dabei, wenn genau eine Trennwand den Zu-und Ablauf trennt, so dass das Abwasser erst nach einem Entlangströmen an einer Seite der Trennwand und einer anschließenden Umlenkung in Richtung auf den Ablauf zufließt.

Ein weiterer wesentlicher Aspekt der Erfindung liegt darin, dass ein weiterer vom Abwasser durchströmbarer Umgehungsbehälter mit einer Schwimmstoffbarriere vorgesehen ist, über welchen bei einer zulaufseitig ankommenden Zuflussmenge, die über einer Zuflussmenge liegt, welche dem Behälter über den Zulauf maximal zufließen kann und/oder bei einem im Betrieb des Behälters zumindest teilweise geschlossenen Zulauf das zulaufseitig ankommende Abwasser in einen an den Ablauf sich anschließenden Bereich gelangt.

Dies hat mehrere Vorteile. Zunächst kann die Behandlungsvorrichtung wirtschaftlich betrieben werden.

Für einen selbsttätig arbeitenden Verschluss zum zumindest teilweisen Verschließen des Zulaufs kann beispielsweise eine Zulaufsperre, eine Schwimmerlösung mit Verschlusselement oder ein reduzierter Zulaufquerschnitt vorgesehen werden.

Insbesondere wird verhindert, dass beispielsweise bei einem Regenereignis und damit einem erhöhten Zulaufvolumenstrom in den Behälter die Rückhaltefunktion des Behälters für dann bereits zurückgehaltene Sink- und Schwimmstoffe nicht mehr sicher erfüllt wird. Denn bei sehr hohen Zulaufmengen in den Behälter pro Zeiteinheit, die über einem für den Behälter ausgelegten maximal vorgesehenen Zulaufvolumenstrom liegen, können durch Rücklösung von im Behälter zurückgehaltenen Schwimm- und/oder Sinkstoffen dann Schadstoffe aus dem Behälter ausgespült und in die Kanalisation gelangen. Dies wird, z. B. durch einen selbsttätigen Zulaufverschluss verhindert oder eine Anordnung, mit welcher bei erhöhten ankommenden Zulaufmengen die maximal über den Zulauf in den Behälter des Abscheiders zufließbare Menge selbsttätig verringert wird. Es kann also ggf, auch bei sehr hohen Abwasserzulaufmengen immer noch ein gewisser bzw. vergleichsweise geringer Anteil des ankommenden Abwassers über den Abscheider geführt werden. Der Behälter wird sozusagen nach einer ersten Regenphase mit stark verschmutztem Regenwasser, mit einer vom Behälter hydraulisch noch sicher zu verarbeitenden Abwassermenge, danach bei höchsten Zulaufmengen vom Regenereignis abgeschnitten oder zumindest wesentliche Anteile am Abscheider vorbeigeführt. Zumindest der größte Teile des weiterhin anfallenden Abwassers, das nach der ersten Phase des Regenereignisses nur noch geringe Schrnutzkonzentrationen aufweist, wird durch die zumindest teilweise Schließung des Zulaufs über den Umgehungsbehälter geführt bzw. darin separat behandelt. Die Schwimmstoffbarriere hält dabei die weiterhin im ankommenden Volumenstrom mitgeführten Schwimmstoffe sicher im Umgehungsbehälter zurück.

Der Umgehungsbehälter kann insbesondere ein am Behälter angeordneter schachtartiger kleinerer Zusatzbehälter sein. Der Umgehungsbehälter ist innen insbesondere zweigeteilt in einen zulaufseitigen Teil und einen ablaufseitigen Teil, wobei die Teile über eine Syphon- und/oder Tauchwandanordnung getrennt und vom Abwasser hintereinander durchströmt werden. In dem schachtartigen Umgehungsbehälter kann als Schwimmstoffbarriere beispielsweise eine Tauchwand mit einer überfließbaren Abwasserschwelle kombiniert sein oder ein Siphonrohr vorgesehen sein. Im Umgehungsbehälter zurückgehaltene Schwimmstoffe können später im Normalbetrieb des Behälters aus dem Umgehungsbehälter über den Zulauf dem Behälter zufließen und dort abgeschieden werden. Damit wird erreicht, dass selbst noch geringe Konzentrationen an Schwimmstoffen bei jedoch hohen Volumenströmen vom Abwasser im Umgehungsbehälter getrennt werden.

Bevorzugt mündet das über den Ablauf aus dem Behälter abfließende vorbehandelte Abwasser in eine offene Rinne im durchströmbaren Umgehungsbehälter, von welcher das Abwasser weiter, z. B. über ein Rohr in die Kanalisation gelangen kann. Vorteilhafterweise kann mit dieser Anordnung eine Leistungsdokumentation des Behälters erfolgen, wobei über das ablaufseitig zugängliche Abwasser eine Probenahme zur Beprobung des aus dem Behälter abfließenden Abwassers stattfinden kann.

Des Weiteren kann ein ablaufseitiger Teil des Umgehungsbehälters vorteilhaft belüftet bzw. nach oben zur Atmosphäre hin offen sein z. B. durch einen gelochten Straßen-Kanaldeckel abgedeckt, womit der in der Regel vom Gesetzgeber vorgeschriebenen Belüftungspflicht, was die Ablaufseite des Behälters betrifft, entsprochen werden kann. Der zulaufseitige Teil des Umgehungsbehälters ist dicht nach oben verschlossen. So kann bei z. B. einem Aufstauen von Abwasser im zulaufseitigen Teil des Umgehungsbehälters kein Abwasser unkontrolliert in die Umwelt gelangen.

Vorteilhafterweise ist die Anbindung des Umgehungsbehälters an den Behälter derart gestaltet, dass die im durchströmten Umgehungsbehälter mit der Schwimmstoffbarriere zurückgehaltenen Schwimmstoffe für den Fall, dass der Umgehungsbehälter nicht mehr von Abwasser durchströmt wird, in den Behälter einfließen. So kann sichergestellt werden, dass die im Umgehungsbehälter abgeschiedenen Schwimmstoffe nach dem insbesondere Regenereignis anschließend bei einer normalen Zulaufmenge die zwischenzeitlich im Umgehungsbehälter angesammelten Schwimmstoffe dem Abscheidevorgang in dem Abscheider unterzogen werden und so einer gesicherten Entsorgung zuführbar sind.

Bei bekannten Anlagen sind Umgehungsleitungen im Einsatz, über welche bei überschreiten einer maximal zulaufseitigen Zulaufmenge in den Abscheider das ankommende Abwasser nicht über den Abscheider sondern über eine Umgehungsleitung insbesondere ohne eine Schwimmstoffbarriere in das Kanalsystem geführt wird, so dass dabei mitgeführte Schwimmstoffe ungehindert in ein Kanalsystem bzw. in einen Vorfluter gelangen können.

Damit der Abscheider gegen ein Einfließen von Abwasser über den Ablauf des Abscheidebehälters bei z. B. einem Rückstau aus dem Kanalsystem bzw. aus dem ablaufseitigen Teil des Umgehungsbehälters gesichert ist, ist in der Regel eine Rückstausicherungseinrichtung zum Beispiel mit einer selbsttätig wirkenden Rückschlagklappe im Ablauf des Behälters des Abscheiders integriert.

Des Weiteren ist die Erfindung auf eine Leichtflüssigkeits-Abscheideranlage mit einer der vorgenannten Vorrichtungen gerichtet. Damit lassen sich Abwässer behandeln, deren Inhaltsstoffe besonders wassergefährdend sind, die zum Beispiel zu den Kohlenwasserstoffen zu zählen sind. Die Leichtflüssigkeits-Abscheideranlage kann insbesondere als selbsttätig arbeitender Öl- oder Fettabscheider ausgebildet sein, wobei im zu behandelnden Abwasser vorhandene Anteile an öl, Fett oder andere mineralische und/oder nichtmineralische Kohlenwasserstoffe aus dem Abwasser effektiv abgeschieden werden können. Leichtflüssigkeits-Abscheideranlagen sind zum Beispiel bei Tankstellen, Waschanlagen, Autobahnraststätten oder auf Grundflächen von Außenbereichen von Gewerbebetrieben wie zum Beispiel Fahrzeug-Entsorgungsbetrieben in der Regel im Boden versenkt bzw. im Erdreich vergraben im Einsatz.

Die Erfindung bezieht sich außerdem auf eine Abscheideranlage für die Behandlung eines Abwasserstromes, wobei eine der oben erläuterten Behandlungsvorrichtungen vorhanden ist. Damit lassen sich für eine Abscheideranlage die oben erläuterten Vorteile und Merkmale realisieren.

Die Abscheideranlage kann zum Beispiel mehrere Einheiten umfassen, wobei zumindest eine Einheit eine der vorgenannten Behandlungsvorrichtungen umfasst.

### Figurenbeschreibung:

Weitere Merkmale und Vorteile der Erfindung werden anhand verschiedener schematisch dargestellter Ausführungsbeispiele der Erfindung näher erläutert.

Im Einzelnen zeigt:
- Figur 1: eine Draufsicht auf eine oben offene erfindungsgemäße Vorrichtung zur Behandlung von Abwasser,
- Figur 2: eine Schnittansicht gemäß der Linie A-A aus Figur 1,
- Figur 3: eine Schnittansicht gemäß der Linie B-B aus Figur 1,
- Figur 4: eine Schnittansicht gemäß der Linie C-C aus Figur 1,
- Figur 5: eine weitere Behandlungsvorrichtung schematisiert in Draufsicht,
- Figur 6: eine zu Figur 5 vergleichbare Behandlungsvorrichtung mit einem runden Behältergrundriss in Draufsicht,
- Figur 7: eine Ansicht der Behandlungsvorrichtung aus Figur 5 gemäß des Pfeils A unter Weglassung einer vorderen Behälterwand,
- Figur 8: eine weitere Behandlungsvorrichtung in Draufsicht,
- Figur 9: eine Schnittansicht gemäß der Linie A-A aus Figur 8,
- Figur 10: eine Detailansicht eines Schnittes gemäß der Linie B-B aus Figur 8,
- Figur 11: ein Detailschnitt gemäß der Linie C-C in Figur 8,
- Figur 12: eine stark schematisierte Draufsicht auf eine Behandlungsvorrichtung mit einem Umgehungsbehälter,
- Figur 13: den Umgehungsbehälter gemäß Figur 12 im Schnitt,
- Figur 14: eine weitere Variante einer Behandlungsvorrichtung mit einem umgehungsbehälter in Draufsicht,
- Figur 15: einen Schnitt durch den Umgehungsbehälter gemäß Figur 14,
- Figur 16: eine weitere variante einer Sehandlungsvorrichtung in Draufsicht mit einem Hilfsbehälter und
- Figur 17: den Hilfsbehälter gemäß Figur 16 im Schnitt.

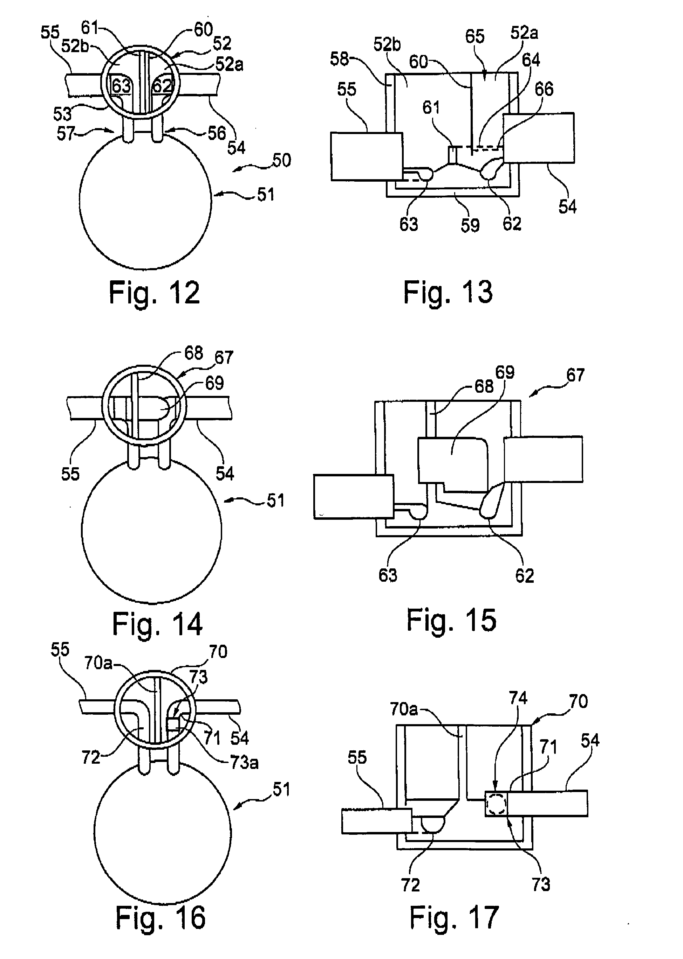

In den Figuren 12 bis 17 sind teils die gleichen Bezugszeichen für einzelne sich entsprechende Elemente unterschiedlicher Ausführungsbeispiele verwendet.

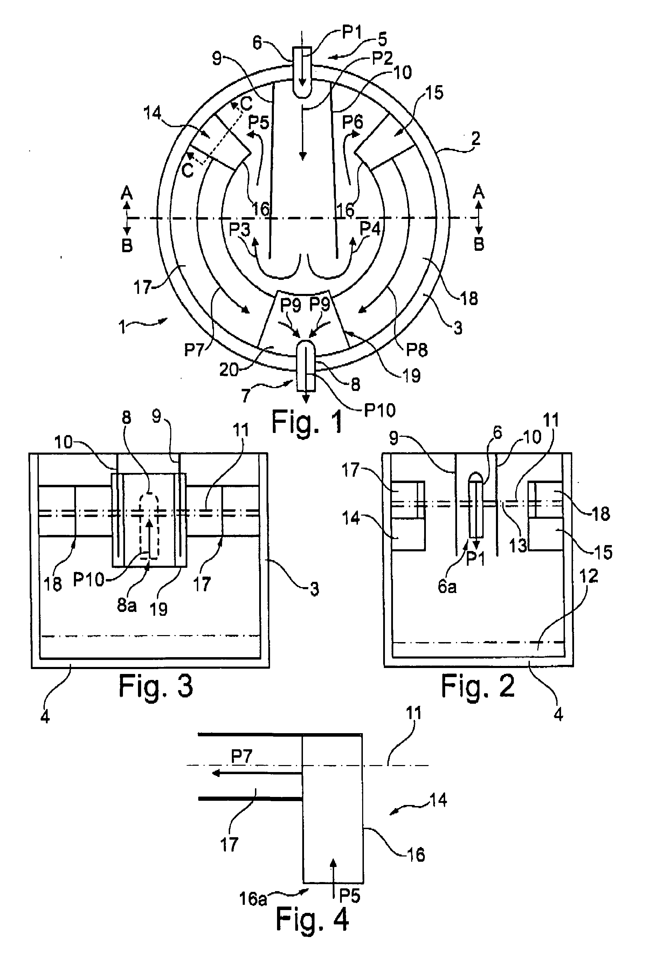

Figur 1 zeigt eine erfindungsgemäß Vorrichtung zur Behandlung von Abwasser, die hier als Abwasservorbehandlungsanlage bzw. beispielsweise als Kombinationsanlage zur kombinierten Abscheidung von Sink- und Schwimmstoffen in einer Einheit ausgebildet ist. Nachfolgend wird die Abwasserbehandlungsanlage als Abscheider 1 bezeichnet. Der Abscheider 1 dient zur Abscheidung von im Abwasser mitgeführten Sink- bzw.

Feststoffen und Schwimmstoffen, beispielsweise Leichflüssigkeiten wie Benzin, Öl oder Diesel.

In Figur 1 ist außerdem ein theoretischer Strömungsweg von durch den Abscheider 1 fließendem Abwasser gemäß der Strömungspfeile P1 bis P10 schematisiert angedeutet. Auch in den weiteren Figuren sind teilweise entsprechende Strömungspfeile eingezeichnet.

Der Abscheider 1 umfasst einen aufrecht stehenden zylindrischen Behälter 2 mit einer Behälterwand 3 und einem Behälterboden 4. Ein die Behälterwand 3 durchstoßenden Zulauf 5 umfasst ein Zulaufrohr 6, welches im ersten Teil horizontal ausgerichtet durch die Behälterwand 3 durchgeführt und innen im Behälter 2 senkrecht nach unten abgewinkelt ist, wobei über eine untere Öffnung 6a ein zu behandelndes Abwasser in ein Behälterinneres 2a gemäß Strömungspfeil P1 einströmen kann.

Gegenüberliegend zum Zulauf 5 ist ein Ablauf 7 vorhanden. Der Ablauf 7 wird entsprechend dem Zulaufrohr 6 durch ein abgewinkelt ausgebildetes Ablaufrohr 8 gebildet, mit einem vertikal nach unten offenen Abschnitt mit einer Ablauföffnung 8a, so dass vorbehandeltes Abwasser durch das Ablaufrohr 8 aus dem Behälterinneren 2a gemäß Pfeil P10 abfließen kann.

An einer Innenseite 3a der Behälterwand 3 ist beidseitig des Zulaufs 5 jeweils eine als Tauchwand 9 und Tauchwand 10 ausgebildete rechteckförmige Trennwand vorhanden. Die Tauchwände 9 und 10 reichen über eine vorgebbare Tiefe in ein Abwasservolumen im Behälter 2. Das Abwasservolumen weist im Betrieb des Behälters 2 einen sich einstellenden Abwasserspiegel 11 auf, was gestrichelt in Figur 3 angedeutet ist. Der Abwasserspiegel 11 ist durch eine Unterkante einer Öffnung der Behälterwand 3 festgelegt, durch welche das Ablaufrohr 8 reicht. Sowohl die Öffnung 6a des Zulaufrohres 6 als auch eine Öffnung 8a des Ablaufrohrs 8 liegen unterhalb des Abwasserspiegels 11.

In dem ersten vom Abwasser durchströmten Bereich des Behälters 2, was die Strecke gemäß der Pfeile P2 bis P6 betrifft, erfolgt eine Vorreinigung des zu behandelnden Abwassers, indem eine Grobabscheidung von Sinkstoffe durch die verringerte Fließgeschwindigkeit im Behälter stattfindet. Eine sich dabei auf dem Behälterboden 4 bildende Schlammschicht 12 ist lediglich in Figur 2 angedeutet. Der gesamte Abwasserstrom gemäß Strömungspfeil P2 zwischen den beiden Trennwänden 9, 10 wird an deren freien Enden durch eine Umlenkanordnung in zwei Teilströme aufgeteilt, was die Strömungspfeile P3 und P4 veranschaulichen.

Simultan zum Absinken der Sinkstoffe im ersten Bereich des Behälters 2 bewegen sich wesentliche Anteil der vom Abwasser mitgeführten Schwimmstoffe nach oben und bilden eine Schwimmschicht 13 unterhalb des Abwasserspiegels 11 (Figur 2). Die beschriebene Abscheidewirkung des Abscheiders 1 zwischen dem Zulauf 5 und zwei Siphoneinrichtungen 14 und 15, welche weiter unten erläutert werden, entspricht einem Abscheider der Klasse II. Da diese Abscheidungsvorgänge einen ersten Teilvorgang der gesamten Abscheidungsvorgänge im Abscheider 1 bilden, kann dieser integrale Bestandteil als Vorabscheiderbezeichnet werden.

weitere Abscheidungsvorgänge erfolgen nach dem Passieren der Siphoneinrichtungen 14 und 15, mit denen ein neben einer Strömungsberuhigung Übertrag von bereits durch Aufschwimmen abgeschiedenen Schwimmstoffen im ersten Bereich des Behälters 2 in nachfolgende Bereiche verhindert wird. Die Siphoneinrichtungen 14 und 15 umfassen jeweils ein vertikal nach unten gerichtetes offenes Tauchrohr 16, so dass Abwasser unterhalb der Schwimmschicht 13 durch Passieren von unterhalb des Abwasserspiegels 11 positionierten Tauchrohröffnungen 16a der Tauchrohre 16 in einen als Rinnen 17, 18 ausgebildeten Nachbehandlungsbereich für das Abwasser gelangt. In den Rinnen 17, 18 werden insbesondere restliche bzw. mit dem Abwasserstrom mitgeführte kleinste schwimmfähige mit dem Abwasser mitgeführte Partikel bzw. Tröpfchen wie beispielsweise Leichtflüssigkeitströpfchen zusammengeführt, so dass sich eine entsprechend große Auftriebskraft der aneinander angelagerten Tropfen ergibt, die zu einer schnellen und nahezu vollständigen Abscheidung dieser Schwimm- bzw. Leichtflüssigkeitspartikel führt. Da die im Zulaufstrom mitgeführten und dem Behälter 2 ursprünglich zugeführten Sinkstoffe nahezu komplett abgeschieden sind, findet nur noch in einem sehr geringen Umfang eine Abscheidung von restlichen Sinkstoffen in den Rinnen 17, 18 statt.

Die Rinnen 17, 18 sind als rechteckkanalförmige und oben offene Profile ausgebildet, welche sich über Teilabschnitte entlang einer Innenseite 3a der Behälterwand 3 gekrümmt daran entlang erstrecken. So werden identische Strömungswege der beiden Teilströme vorgegeben, welche in Richtung des Ablaufs 7 wieder zusammenführen.

Beide Teilströme des Abwassers gemäß der Strömungspfeile P7 und P8 werden dem Ablauf 7 über eine weitere

Siphoneinrichtung 19 zugeführt, wiederum um die aufschwimmende Schicht der Schwimmstoffe in den Rinnen 17 und 18 darin zurückzuhalten. Abwasser der beiden Teilströme gelangt nach Passieren der Siphoneinrichtung 19 in einen Abwassersammelbereich 20 und anschließend gemäß der Strömungspfeile P9 in das Ablaufrohr 8, das ebenfalls als Siphon wirkt, da es als Tauchrohr ausgebildet ist (Figur 3). Über das Ablaufrohr 8 verlässt das vorbehandelte Abwasser gemäß des Strömungspfeils P10 den Behälter 2.

Insgesamt passiert das Abwasser beim Durchströmen durch den Behälter 2 mit dem Zulaufrohr 6, den Siphoneinrichtungen 14 bzw. 15, der Siphoneinrichtung 19 und dem Ablaufrohr 8 viermal eine Barriere, welche das Abwasser nur durch Unterströmen passieren kann, meist mit einer Änderung der Strömungsrichtung in vertikaler Richtung an Wandungen der Siphoneinrichtungen 14, 15, 19 bzw. der Rohre 6 und 8.

Dies trägt neben der verlängerten Strömungsstrecke im Behälter zur hohen Abscheideleistung des Abscheiders 1 bei, insbesondere zur effektiven Schwimmstoffrückhaltung im Behälter 2.

Die verlängerte Strömungsstrecke im Behälter ergibt sich durch mehrfache Umlenkungen des Abwasserstroms in horizontaler Richtung beim Durchströmen des Behälters 2 gemäß der Strömungspfeile P1 bis P10. Somit wird ein verlängerter Strömungsweg des Abwassers durch den Abscheider erreicht, welcher bis um ca. das dreifache größer ist als ein Strömungsweg durch vergleichbare bekannte Abscheider.

Der zurückgelegte Strömungsweg in einer der Rinnen 17, 18 zwischen den Siphoneinrichtungen 14, 15 und der Siphoneinrichtung 19 kann beispielsweise 1,2 bis 1,3 mal größer als der Durchmessers des Behälters 2 sein.

Insgesamt kann die zurückgelegte Fliesstrecke des Abwassers durch den Abscheider 1 um das Dreifache gegenüber vergleichbaren bekannten Abscheidern vergrößert werden, wodurch die Abscheideleistung des erfindungsgemäßen Abscheiders 1 erhöht ist.

Damit einher geht ein größeres Absetzvermögen für Sink- bzw. Schlammstoffe im Abscheider 1 und damit ein kleinerer Übertrag von diesen Sinkstoffen in die Vorfluteranlagen bzw. in einen Ablaufkanal erreicht werden.

Bei vergleichbaren erreichbaren Ablaufwerten für Abscheider können erfindungsgemäße Behälter kleiner als Behälter bekannter Abscheider gewählt werden bzw. müssen umgekehrt bislang größere Behältern eingesetzt werden.

Insbesondere kann auf bisher übliche Koaleszenzeinsätze verzichtet werden, welche regelmäßig verstopfen bzw. dann versagen.

Eine Länge der Siphoneinrichtungen 14 und 15 in Strömungsrichtung des Abwassers kann variabel gewählt werden, beispielsweise bei Einsatzbereichen, in denen mehr Leichtflüssigkeitsmengen anfallen, können längere Siphoneinrichtungen 14, 15 eingebaut werden. Somit wird die Leichtflüssigkeitskapazität erhöht. In anderen Anwendungen, bei denen beispielsweise viel Schlamm bzw. Sinkstoffe anfallen, wie beispielsweise bei Kiesgruben- oder Bauabwässern, können kürzere Siphons gewählt werden, um die Schlammspeicherkapazität zu erhöhen.

Vorteilhafterweise kann je nach Vorgabe ein Behälter bereits durch kleinere Anpassungen erfindungsgemäß ausgestaltet werden, um unterschiedliche Einsatzbereiche abzudecken.

Außerdem sind die erfindungsgemäßen Anordnungen vergleichsweise einfach zu reinigen. Einbauten wie beispielsweise die Tauchwände 9 und 10 lassen sich wegklappbar ausgestalten. So kann zur Reinigung und dergleichen insbesondere an tiefer gelegene bzw. seitliche Bereiche im Inneren des Behälters 2 besser herangekommen werden. Grundsätzlich lassen sich die im Behälter 2 angeordneten Elemente wie Trennwände, Siphoneinrichtungen, Rinnen, Umlenkanordnungen und Abwassersammelbereiche auch in liegenden zylindrischen Behältern oder in Mehreck- bzw. Rechteckbehältern einrichten.

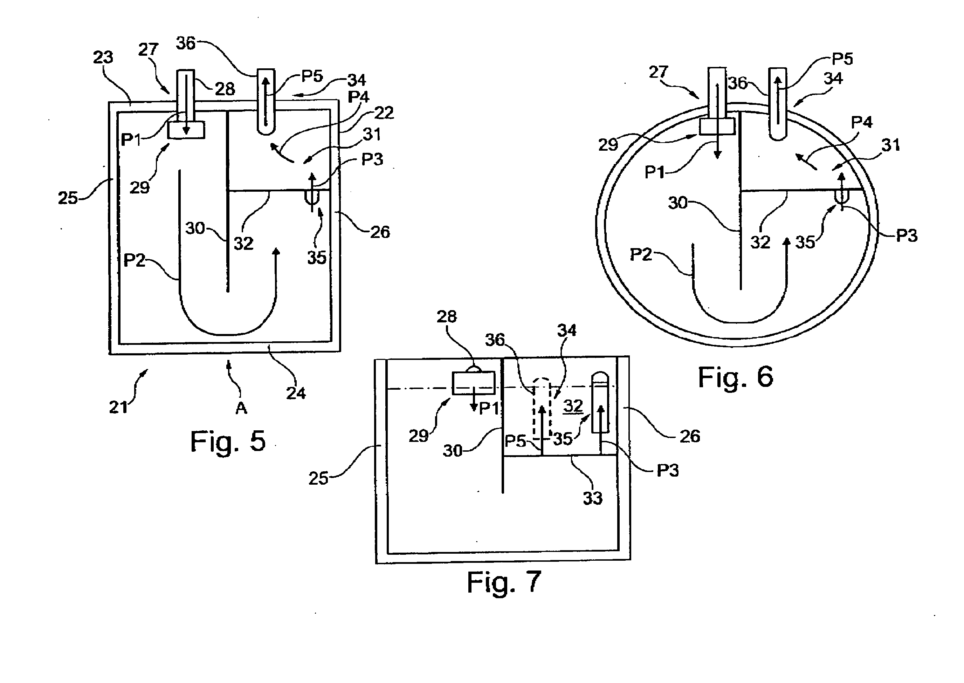

Einen weiteren erfindungsgemäßen Abscheider 21 zeigt Figur 5 in Draufsicht. Der Abscheider 21 umfasst einen im Grundriss rechteckigen Behälter 22 mit einer zu- und ablaufseitigen Behälterwand 23, einer gegenüberliegenden Behälterwand 24 und dazwischen jeweils gegenüberliegenden Behälterwänden 25 und 26. Der Abscheider 21 umfasst außerdem einen Zulauf 27 mit einem durch die Behälterwand reichenden Zulaufrohr 28 und einen Geruchsverschluss 29, der in der Art eines Siphons ausgebildet sein kann. Das Zulaufrohr 28 mit der dem Geruchsverschluss 29 dient insbesondere als Zulaufverteiler, durch welchen eine Strömungsvergleichsmäßigung des Abwassers erreicht wird. Der Geruchsverschluss 29 kann auch eine Zulaufsperre umfassen.

Des Weiteren ist eine als Tauchwand 30 ausgebildete Trennwand vorhanden, welche stirnseitig an der Behälterwand 23 anschließt und sich in Richtung zur gegenüberliegenden Behälterwand 24 erstreckt, von dieser jedoch über einen Bereich beabstandet ist. In den Behälter 22 einströmendes Abwasser gemäß Pfeil P1 wird anschließend gemäß Pfeil P2 geradlinig zwischen der Trennwand 30 und der Behälterwand 25 in Richtung der Behälterwand 24 geführt und dort über eine Umlenkanordnung zurückgeführt. Dabei erfolgt eine Umlenkung in eine entgegengesetzte Strömungsrichtung. Außerdem ist ein zum restlichen Abwasservolumen im Behälter 22 abgeschlossener Abwassersammelbereich 31 im Bereich um einen Ablauf 34 vorhanden. Der Abwasserbereich 31 ist unten durch einen Boden 33 und zumindest seitlich durch eine vertikale Wand 32, durch Teile der Behälterwände 23 und 26 bzw. der Tauchwand 30 geschlossen. Nach der Grobreinigung während des Strömungsweges gemäß der Pfeile P1 und P2 im Behälter 22 gelangt das vorgereinigte Abwasser durch eine Siphoneinrichtung 35 in den Abwassersammelbereich 31. Im Abwassersammelbereich 31 findet eine Nachbehandlung des Abwassers bzw. eine physikalische bzw. Schwerkraft-Abscheidung letzter Anteile insbesondere von Schwimm- bzw. Leichtflüssigkeitsstoffen statt.

Über den Ablauf 34 mit einem Ablaufrohr 36, welches als Tauchrohr ausgebildet ist, erfolgt der Abfluss des Abwassers gemäß Strömungspfeile P4 und P5 aus dem Behälter 22.

Eine entsprechende Anordnung mit einem zylindrischen Behälter 22 zeigt Figur 6. In Figur 6 sind für sich entsprechende Bauteile die gleichen Bezugszeichen wie in Figur 5 verwendet.

Figur 7 zeigt einen Schnitt durch die Anordnung gemäß Figur 5, wobei sich im Schnitt durch Figur 6 das im Prinzip gleiche Schnittbild ergibt. In Figur 7 ist außerdem ein Abwasserspiegel im Behälter 22 gestrichelt angedeutet.

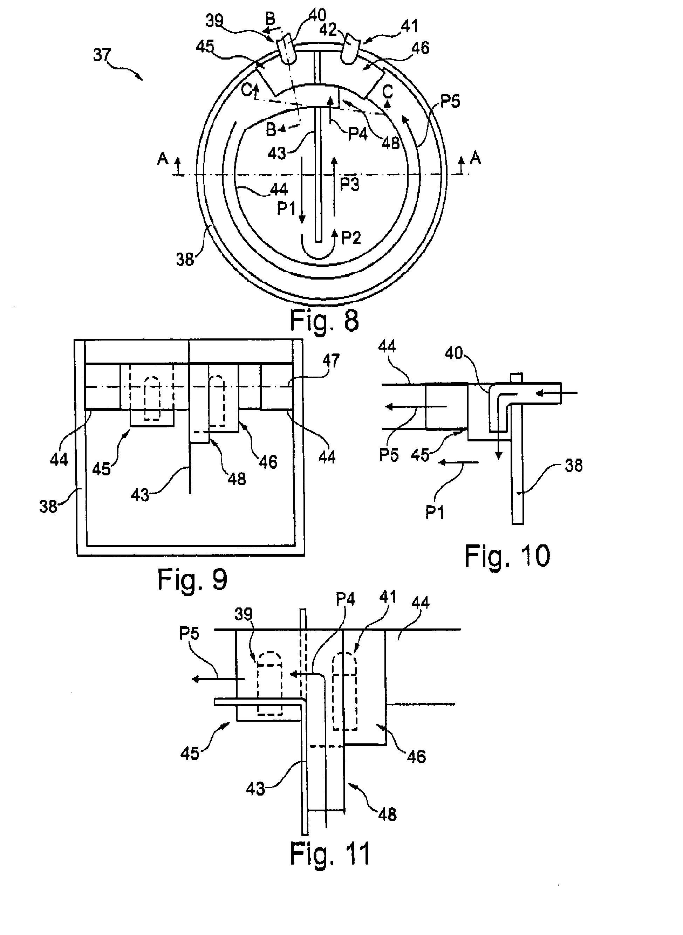

In den Figuren 8 bis 11 ist eine weitere erfindungsgemäße Variante eines Abscheiders 37 gezeigt. Der Abscheider 37 ist ebenfalls als in seiner Außenform zylindrischer Behälter mit einer Behälterwand 38 ausgebildet. Der Abscheider 37 umfasst auf der gleichen Seite einen Zulauf 39 mit einem Zulaufrohr 40 und einen Ablauf 41 mit einem Ablaufrohr 42. Zwischen Zulauf 39 und Ablauf 41 ist eine als Tauchwand 43 ausgebildete Trennwand vorgesehen, welche sich als strömungsleitende Wand von der Innenseite der Behälterwand 38 über einen mittleren Bereich des Abscheiders 37 bis auf die dem Zulauf 39 und dem Ablauf 41 gegenüberliegende Seite erstreckt. Die Tauchwand 43 endet auf der dem Zulauf 39 abgewandten Seite vor Erreichen einer Rinne 44, die einen Nachbehandlungsbereich des Abscheiders 37 darstellt, was weiter unten noch näher erläutert wird. Dem Zulauf 39 ist eine Siphoneinrichtung 45 nachgelagert und dem Ablauf 41 ist eine Siphoneinrichtung 46 vorgelagert. Außerdem ist das Zulaufrohr 40 und das Ablaufrohr 42 wie in dem Abscheider 1 jeweils als abgewinkeltes Rohr ausgebildet, das mit einem nach unten weisenden offenen Rohrabschnitt unterhalb eines Abwasserspiegels 47 endet.

Das Abwasser wird nach Passieren des Zulaufs 39 entlang der einen Seite der Tauchwand 43 gemäß des Strömungspfeils P1 vom Zulauf 39 weggeführt und am vom Zulauf 39 entfernten Ende der Tauchwand 43 an der Innenseite der Rinne 44 gemäß Pfeil P2 um ca. 360 °c umgelenkt und anschließend auf der anderen Seite der Tauchwand 43 gemäß Strömungspfeil P3 zurück in Richtung des Ablaufes 41 geführt. Bis dahin kann die Grobabscheidung stattfinden. Anschließend erreicht das vorgereinigte Abwasser eine weitere Siphoneinrichtung 48, über welche das Abwasser anschließend in die Rinne 44 gelangt. Die Rinne 44 ist ebenfalls wie bereits gemäß der Ausführungsform aus den Figuren 1 bis 4 rinnenförmig und vom Abwasser anderer Bereiche im Abscheider 37 getrennt, so dass das Abwasser ausschließlich über die Siphon-Einrichtung 48 in die Rinne 44 gelangen kann.

Für den Übergang von der Siphoneinrichtung 48 zur Rinne 44 ist in der Tauchwand 43 ein entsprechender Bereich ausgespart, so dass Abwasser in der Rinne 44 von der einen Seite der Tauchwand 43 zur anderen Seite der Tauchwand 43 gelangen kann und dort kreisförmig geführt bis zum Ablauf 41 gelangt und dort über die Siphoneinrichtung 46 und anschließend über das Ablaufrohr 42 den Abscheider 37 vorbehandelt verlässt.

Figur 9 zeigt eine Schnittansicht gemäß der Linie A-A aus Figur 8, Figur 10 eine Detailansicht eines Schnittes gemäß Linie B-B aus Figur 8 und Figur 11 einen Detailschnitt gemäß der Schnittlinie C-C aus Figur 8.

Die Ausführungsbeispiele mit einem als Rinne ausgebildeten Nachbehandlungsbereich gemäß der Figuren 1 bis 4 und 8 bis 11 können als Hochleistungsschwimmstoff- bzw. Hochleistungsfettabscheideranlage ausgebildet sein. Da das zu behandelnde Abwasser in der Regel eine erhöhte Temperatur aufweist, was einer effektiven Fettabscheidung besonders in den Rinnen 17, 18 bzw. 44 bzw. im Nachbehandlungsbereich entgegensteht, ist es vorteilhaft, wenn die Rinne 17 und 18 bzw. die Rinne 44 unten und seitlich zumindest bis zum Abwasserspiegel 11 bzw. 47 im Behälter 2 bzw. Abscheider 37 mit einer Wärmeisolierung versehen sind. Denn damit wird das Abwasser in den Rinnen 17, 18 bzw. 44 nicht oder nur unwesentlich vom außen umgebenden Abwasser erwärmt, sondern das Abwasser in den Rinnen 17, 18 bzw. 44 kann entsprechend besser abkühlen, insbesondere begünstigt durch die nach oben offenen Rinnen 17, 18 bzw. 44, womit eine effektivere Fett- bzw. Schwimmstoffabscheidung stattfinden kann, als ohne wärmedämmende Isolierung der Rinnen 17, 18 bzw. 44. Zum Abfließen des vorbehandelten Abwassers aus den Rinnen 17, 18 bzw. 44 wird dann bevorzugt nur ein Tauchrohr vorgesehen.

Figur 12 zeigt eine erfindungsgemäße Behandlungsvorrichtung 50 mit einem **als Bypass dienenden** Umgehungsbehälter 52 und einem ohne Details dargestellten Abscheider 51, bei dem ein Zulauf 56 und ein Ablauf 57 nebeneinander liegen. Eine selbsttätige Zulaufsicherung zum Verschließen des Zulaufs und eine selbsttätige Ablaufsicherung zum Verschließen des Ablaufs bei besonderen Betriebssituationen des Abscheiders 51, die bei allen gezeigten Anordnungen in der Regel vorhanden sind, sind wie in sämtlichen weiteren Figuren nicht dargestellt. Der ohne Deckel bzw. Abdeckung gezeigte Umgehungsbehälter 52 ist innen unterteilet in einen zulaufseitige Teil, der als Zulaufschacht 52a ausgebildet ist, und einen Probeentnahmeschacht 52b, der für eine Probenentnahme für eine Ablaufprobe eines aus dem Abscheider 51 ablaufenden Stoffstromes dienen kann, wobei der Probeentnahmeschacht 52b zur Umgebung über Öffnungen belüftet ist und als Ent- und Belüftungsschacht dient, was aus Sicherheitsgründen notwendig ist bzw. vom Gesetzgeber in der Regel vorgeschrieben ist. Der Zulaufschacht 52a ist nach oben über einen nicht dargestellten Schachtdeckel dicht zur Umgebung abgeschlossen.

Der Umgehungsbehälter 52 dient als Bypass-Anordnung zum Abscheider 51 und ist als Schacht in Zylinderform bzw. als Rundschacht 53 ausgebildet. Außerdem ist eine Zulaufleitung 54 für der Behandlungsvorrichtung 50 zulaufendes Abwasser und eine Ablaufleitung 55 für die Behandlungsvorrichtung 50 verlassendes vorbehandeltes Abwasser vorhanden. Die Zulaufleitung 54 versorgt den Zulauf 56 in den Abscheider 51 bzw. die Ablaufleitung 55 schließt sich an den Ablauf 57 des Abscheiders 51 an. Dazwischen ist der nach oben zur Atmosphäre offene Umgehungsbehälter 52 mit einer Behälterwand 58, einem Behälterboden 59, einer Tauchwand 60, eine Betonschwelle 61, einer Zulaufrinne 62 und einer Ablaufrinne 63 vorhanden. Ein gelochter Deckel des Umgehungsbehälters 52 ist nicht gezeigt.

Wird nun bei einem starken Regenereignis der Zulauf 56 beispielsweise selbsttätig für weiteres zulaufendes Abwasser gesperrt, staut sich das über die Zulaufleitung 54 in den Umgehungsbehälter 52 in die Zulaufrinne 62 gelangendes Abwasser im Umgehungsbehälter 52 an. Dabei stellt sich ein Abwasserspiegel 64 ein, welcher sich durch die Höhe der Betonschwelle 61 definiert. Da die Tauchwand 60 unterhalb des Abwasserspiegels 64 eintaucht, können über die Zulaufleitung 54 ankommende Schwimmstoffe in einem Abscheidebereich 65 des Umgehungsbehälters 52 abgeschieden werden, was als Schwimmschicht 66 schematisiert angedeutet ist. Das unter der Tauchwand 60 durchfließende Abwasser gelangt in den Bereich der Ablaufrinne 63 und über diese in die Ablaufleitung 55.

Vorteilhafterweise kann im Normalbetrieb bei geöffnetem Umgehungsbehälter 52 das den Abscheider 51 verlassende vorbehandelte Abwasser beprobt werden.

Eine ganz ähnliche Bypass-Anordnung zum Abscheider 51 zeigen die Figuren 14 und 15. Dabei ist in einem Umgehungsbehälter 67 mit einer Trennwand 68 und einem durch die Trennwand 68 gehenden abgewinkelten Überlaufrohr 69 versehen, die anstelle der Tauchwand und der Betonschwelle gemäß Figur 12 und 13 vorhanden sind. Ansonsten funktioniert der Umgehungsbehälter 67 entsprechend dem Umgehungsbehälter 52.

Eine weitere erfindungsgemäße Variante zeigen die Figuren 16 und 17, wobei diese keine Bypass-Anordnung zum Abscheider 51 betreffen. Neben einer Ablaufrinne 72 ist anstelle einer offenen Zulaufrinne in einem Hilfsbehälter 70 mit einer Trennwand 70a ein geschlossenes Zulaufrohr 71 mit einem Kasten 73 mit einer von einem zum Beispiel fest angeschraubtem Deckel 73a dicht verschließbaren Öffnung 74 vorgesehen. Die Öffnung 74 dient insbesondere zu Reinigungszwecken des zulaufenden Abwassers. Über die Öffnung 74 kann ein Absperrelement für das Zulaufrohr 71 zum Beispiel eine Absperrblase eingebracht werden, um eine Dichtheitsprüfung des Abscheiders 51 vornehmen zu können.

Der Schacht bzw. Kasten 73 kann auch zum Richtungswechsel der Durchflussrichtung des Abwassers durch den Abscheider 51 genutzt werden. Wenn z. B. eine Zulaufsperre das Zulaufrohr 71 sperrt, verhindert der Kasten 73, welcher als Reinigungsstück ausgebildet ist, dass Abwasser durch den Kasten 73 in die Umwelt gelangen kann. Die Öffnung 74 ist hierfür mit einer entsprechenden Klappe versehen.

### Bezugszeichenliste:

- 1: Abscheider
- 2: Behälter
- 2a: Behälterinnere
- 3: Behälterwand
- 3a: Innenseite
- 4: Behälterboden
- 5: Zulauf
- 6: Zulaufrohr
- 6a: Öffnung
- 7: Ablauf
- 8: Ablaufrohr
- 8a: Ablauföffnung
- 9, 10: Tauchwand
- 11: Abwasserspiegel
- 12: Schlammschicht
- 13: Schwimmstoffe
- 14, 15: Siphoneinrichtung
- 16: Tauchrohr
- 16a: Tauchrohröffnung
- 17, 18: Rinne
- 19: Siphoneinrichtung
- 20: Abwassersammelbereich
- 21: Abscheider
- 22: Behälter
- 23-26: Behälterwand
- 27: Zulauf
- 28: Zulaufrohr
- 29: Geruchsverschluss
- 30: Tauchwand
- 31: Abwassersammelbereiche
- 32: Wand
- 33: Boden
- 34: Ablauf
- 35: Siphoneinrichtung
- 36: Ablaufrohr
- 37: Abscheider
- 38: Behälterwand
- 39: Zulauf
- 40: Zulaufrohr
- 41: Ablauf
- 42: Ablaufrohr
- 43: Tauchwand
- 44: Rinne
- 45, 46: Siphoneinrichtung
- 47: Abwasserspiegel
- 48: Siphoneinrichtung
- 49: -
- 50: Behandlungsvorrichtung
- 51: Abscheider
- 52: Umgehungsbehälter
- 52a: Zulaufschacht
- 52b: Probeentnahmeschacht
- 53: Rundschacht
- 54: Zulaufleitung
- 55: Ablaufleitung
- 56: Zulauf
- 57: Ablauf
- 58: Behälterwand
- 59: Behälterboden
- 60: Tauchwand
- 61: Betonschwelle
- 62: Zulaufrinne
- 63: Ablaufrinne
- 64: Abwasserspiegel
- 65: Abscheidebereich
- 66: Schwimmschicht
- 67: Umgebungsbehälter
- 68: Trennwand
- 69: Überlaufrohr
- 70: Hilfsbehälter
- 70a: Trennwand
- 71: Zulaufrohr
- 72: Ablaufrinne
- 73: Kasten
- 73a: Deckel
- 74: Öffnung

## Patentansprüche

1. Vorrichtung zur Behandlung von Abwasser mit einem vom Abwasser durchströmbaren Behälter (2, 22), in welchen im Betrieb des Behälters (2, 22) das Abwasser über einen Zulauf (5, 27, 39) zufließt und aus dem das behandelte Abwasser über einen Ablauf (7, 34, 41) abfließt, wobei Strömungsleitmittel mit einer Trennwand (9, 10, 30, 43) vorhanden sind, welche eine Strömung des Abwassers in dem Behälter (2, 22) derart vorgeben, dass wesentliche Anteile von im Abwasser mitgeführten Sink- und/oder Schwimmstoffen im Behälter (2, 22) abscheidbar sind, **dadurch gekennzeichnet, dass** die Trennwand (9, 10, 30, 43) derart ausgebildet ist, dass im Betrieb des Behälters (2, 22) das vom Zulauf (5, 27, 39) kommende Abwasser entlang der Trennwand (9, 10, 30, 43) in Richtung eines dem Zulauf (5, 27, 39) gegenüber liegenden Bereichs des Behälters führbar ist, wobei das Abwasser im weiteren Strömungsverlauf eine Siphoneinrichtung (14, 15, 35, 48) durchströmt und anschließend in einen zu anderen Bereichen des Behälters getrennten Nachbehandlungsbereich (17, 18, 31, 44) gelangt.

2. Vorrichtung nach dem Oberbegriff des Anspruchs 1, insbesondere nach Anspruch 1, **dadurch gekennzeichnet, dass** der Zulauf (27, 39, 56) und der Ablauf (34, 41, 57) in Draufsicht auf den Behälter (2, 22) über einen Winkelbereich von mehr als 200 Grad, insbesondere von mehr als 300 Grad versetzt sind.

3. Vorrichtung nach Anspruch 1 oder 2, **dadurch gekennzeichnet, dass** eine Umlenkanordnung vorgesehen ist, so dass an einem dem Zulauf (5, 27, 39) abgewandten Ende der Trennwand (9, 10, 30, 43) eine Umlenkung des Abwasser erfolgt.

4. Vorrichtung nach einem der vorhergehenden Ansprüche, **dadurch gekennzeichnet, dass** der Nachbehandlungsbereich derart im Behälter (2, 22) integriert ist, dass im Betrieb des Behälters (2, 22) der Nachbehandlungsbereich zumindest teilweise unterhalb eines Abwasserspiegels liegt, wobei auf einer Innenseite einer Wandung des Nachbehandlungsbereichs
eine Strömung des Abwassers vorherrscht, welche zur vorherrschenden Strömung des Abwassers auf einer Außenseite der Wandung des Nachbehandlungsbereichs entgegengesetzt ist.

5. Vorrichtung nach einem der vorhergehenden Ansprüche, **dadurch gekennzeichnet, dass** der Nachbehandlungsbereich rinnenartig ausgebildet ist, insbesondere benachbart zu einer Innenseite einer Behälterwand verläuft.

6. Vorrichtung nach einem der vorhergehenden Ansprüche, **dadurch gekennzeichnet, dass** der Nachbehandlungsbereich so abgestimmt ist, dass ein Strömungsweg des Abwassers im Nachbehandlungsbereich einen wesentlichen Anteil eines theoretischen Strömungsweges des Abwassers im Behälter (2, 22) vom Zulauf (5, 27, 39) zum Ablauf ausmacht, insbesondere ca. ein Drittel des Strömungsweges.

7. Vorrichtung nach einem der vorhergehenden Ansprüche, **dadurch gekennzeichnet, dass** der Nachbehandlungsbereich ausgestaltet ist, dass ein vom Abwasser im Betrieb des Behälters (2, 22)eingenommenes Volumen im Nachbehandlungsbereich einen vergleichsweise geringen Anteil eines Gesamtaufnahmevolumens für Abwasser im Betrieb des Behälters ausmacht.

8. Vorrichtung nach einem der vorhergehenden Ansprüche, **dadurch gekennzeichnet, dass** zwei gegenüberliegende im Betrieb des Behälters (2, 22) im Abwasser teilweise eingetauchte Trennwände vorhanden sind, in deren Zwischenbereich vom Zulauf (5, 27, 39) kommendes Abwasser mündet und im Zwischenbereich eine Grobreinigung des Abwassers stattfinden kann.

9. Vorrichtung nach einem der vorhergehenden Ansprüche, **dadurch gekennzeichnet, dass** sich die Trennwand (9, 10, 30, 43) von einer Behälterwand in Richtung eines dem Zulauf (5, 27, 39) entgegen gesetzten Bereichs des Behälters (2, 22) erstreckt.

10. Vorrichtung nach einem der vorhergehenden Ansprüche, **dadurch gekennzeichnet, dass** genau eine im Betrieb des Behälters (2, 22) im Abwasser teilweise eingetauchte Trennwand (9, 10, 30, 43) vorgesehen ist, welche sich zumindest bis zu einem mittig gelegenen Bereich des Behälters (2, 22) erstreckt.

11. Vorrichtung nach einem der vorhergehenden Ansprüche, **dadurch gekennzeichnet, dass** sich der Zulauf (27, 39) und der Ablauf (34, 41) auf der gleichen Seite des Behälters (2, 22) befinden.

12. Vorrichtung nach dem Oberbegriff des Anspruchs 1, insbesondere nach einem der vorhergehenden Ansprüche, **dadurch gekennzeichnet, dass** ein weiterer vom Abwasser durchströmbarer Umgehungsbehälter (52) mit einer Schwimmstoffbarriere (60, 61) vorgesehen ist, über welchen bei einer zulaufseitig ankommenden Zuflussmenge, die über einer Zuflussmenge liegt, welche dem Behälter über den Zulauf (56) maximal zufließen kann und/oder bei einem im Betrieb des Behälters zumindest teilweise geschlossenen Zulauf (56) das zulaufseitig ankommende Abwasser in einen an den Ablauf (57) sich anschließenden Bereich gelangt.

13. Vorrichtung nach Anspruch 12, **dadurch gekennzeichnet, dass** die Anbindung des Umgehungsbehälters (52) an den Behälter derart gestaltet ist, dass die im durchströmten Umgehungsbehälter (52) mit der Schwimmstoffbarriere (60, 61) zurückgehaltenen Schwimmstoffe für den Fall, dass der Umgehungsbehälter (52) nicht mehr von Abwasser durchströmt wird, in den Behälter einfließen.

14. Leichtflüssigkeits-Abscheideranlage (1, 21, 37, 51) mit einer Vorrichtung nach einer der vorhergehenden Ansprüche.

15. Abscheideranlage für die Behandlung eines Abwasserstromes mit einer Vorrichtung nach einem der vorhergehenden Ansprüche 1 bis 14.
